# EUROPEAN PATENT APPLICATION

(11) **EP 3 964 799 A1**
(43) Date of publication of application: **09.03.2022**
(21) Application number: 21193339.5
(22) Date of filing: 26.08.2021
(51) Int. Cl.: G01C 21/34, G06Q 10/08

(54) **ROUTE DETERMINATION SYSTEM, ROUTE DETERMINATION METHOD, AND ROUTE DETERMINATION PROGRAM**

(30) Priority: 26.08.2020 JP 2020142462
(71) Applicant: TOYOTA JIDOSHA KABUSHIKI KAISHA, Toyota-shi, Aichi-ken, 471-8571 (JP)
(72) Inventor: IWAMOTO, Kunihiro, Toyota-shi, Aichi-ken 471-8571 (JP); ITOZAWA, Yuta, Toyota-shi, Aichi-ken 471-8571 (JP); KOMURA, Hirotaka, Toyota-shi, Aichi-ken 471-8571 (JP)
(74) Representative: D Young & Co LLP

(57) **Abstract**

A route determination system (300) according to the present disclosure determines a transport route of an article from among a plurality of candidates. Autonomous mobile bodies for transporting the article on the plurality of candidates are different from each other. The route determination system (300) includes a calculation unit (222) configured to calculate, for each of the plurality of candidates, a theft risk based on a degree of theft easiness (2134) and a time required for the transportation by the autonomous mobile body, the degree of theft easiness representing likelihood of an occurrence of theft in the autonomous mobile body, and the theft risk representing a magnitude of a risk of the occurrence of the theft, and a determination unit (223) configured to determine the transport route from among the plurality of candidates so that the theft risk is reduced based on the theft risk calculated by the calculation unit.

## Description

### BACKGROUND

The present disclosure relates to a route determination system, a route determination method, and a route determination program.

Japanese Unexamined Patent Application Publication No. 2002-96913 discloses a technique in which a measurement value and position information of a sensor are recorded on an electronic tag of a delivery article, and the recorded data is used to improve the delivery service. According to the technique disclosed in Japanese Unexamined Patent Application Publication No. 2002-96913, it is possible to select a route with less vibration using the history in which the position information of a vehicle is associated with vibration data.

### SUMMARY

In this case, there has been a problem that the risk of theft is high when a package is delivered using an autonomous mobile body. In particular, when the size of the autonomous mobile body is small, not only the package but also the autonomous mobile body itself has a risk of theft.

The present disclosure achieves a method for determining a transport route of an autonomous mobile body capable of determining a transport route with a little risk of theft.

A route determination system according to the present disclosure determines a transport route of an article from among a plurality of candidates, autonomous mobile bodies for transporting the article on the plurality of candidates being different from each other. The route determination system includes:
a calculation unit configured to calculate, for each of the plurality of candidates, a theft risk based on a degree of theft easiness and a time required for the transportation by the autonomous mobile body, the degree of theft easiness representing likelihood of an occurrence of theft in the autonomous mobile body, and the theft risk representing a magnitude of a risk of the occurrence of the theft; and
a determination unit configured to determine the transport route from among the plurality of candidates so that the theft risk is reduced based on the theft risk calculated by the calculation unit.

A route determination program according to the present disclosure determines a transport route of an article from among a plurality of candidates, autonomous mobile bodies for transporting the article on the plurality of candidates being different from each other. The route determination program causes a computer to execute:
calculating, for each of the plurality of candidates, a theft risk based on a degree of theft easiness and a time required for the transportation by the autonomous mobile body, the degree of theft easiness representing likelihood of an occurrence of theft in the autonomous mobile body, and the theft risk representing a magnitude of a risk of the occurrence of the theft; and
determining the transport route from among the plurality of candidates so that the theft risk is reduced based on the theft risk calculated in the calculating.

A route determination program according to the present disclosure determines a transport route of an article from among a plurality of candidates, autonomous mobile bodies for transporting the article on the plurality of candidates being different from each other. The route determination program causes a computer to execute:
calculating, for each of the plurality of candidates, a theft risk based on a degree of theft easiness and a time required for the transportation by the autonomous mobile body, the degree of theft easiness representing likelihood of an occurrence of theft in the autonomous mobile body, and the theft risk representing a magnitude of a risk of the occurrence of the theft; and
determining the transport route from among the plurality of candidates so that the theft risk is reduced based on the theft risk calculated in the calculating.

According to the present disclosure, it is possible to determine a transport route with a little risk of theft.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic diagram showing an overview of a route determination system according to a first embodiment;
Fig. 2 is a configuration diagram showing a configuration example of the route determination system according to the first embodiment;
Fig. 3 is a block diagram showing a functional configuration of a server according to the first embodiment;
Fig. 4 is a flowchart showing an operation of the route determination system according to the first embodiment;
Fig. 5 is a schematic diagram showing an example of a delivery area;
Fig. 6 shows an example of a candidate of a transport route specified by the route determination system according to the first embodiment;
Fig. 7 shows an example of a candidate of a transport route specified by the route determination system according to the first embodiment;
Fig. 8 shows an example of a theft risk calculated by the route determination system according to the first embodiment;
Fig. 9 is a schematic diagram showing an overview of a route determination system according to a second embodiment;
Fig. 10 is a configuration diagram showing a configuration of a route determination system according to the second embodiment;
Fig. 11 is a configuration diagram showing a functional configuration of a server according to the second embodiment;
Fig. 12 is a schematic diagram showing candidates of a transport route specified by the route determination system according to the second embodiment;
Fig. 13 is a configuration diagram showing a configuration example of a route determination system according to a third embodiment;
Fig. 14 is a configuration diagram showing a functional configuration of a server according to a third embodiment; and
Fig. 15 is a schematic diagram showing an example of a candidate of the transport route specified by the route determination system according to the third embodiment.

### DESCRIPTION OF EMBODIMENTS

### [First embodiment]

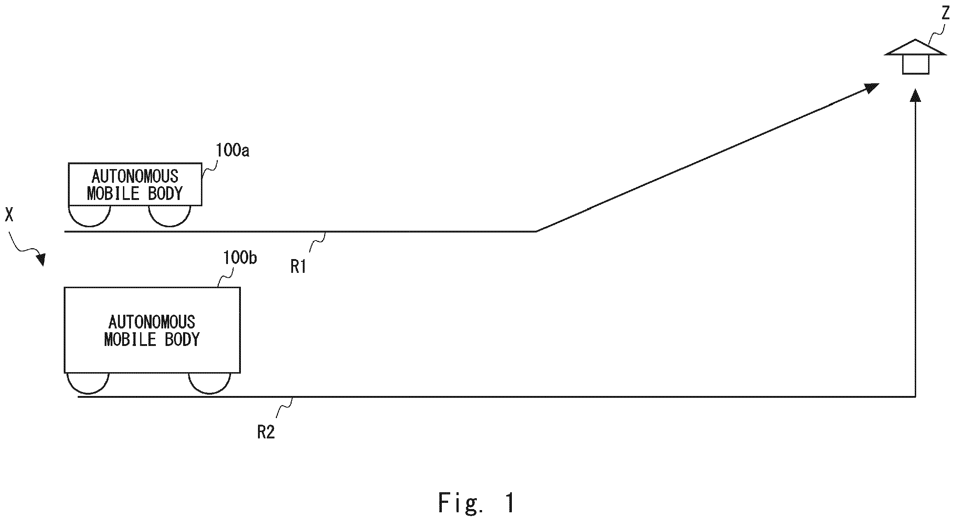

Embodiments of the present disclosure will be described below with reference to the drawings. Fig. 1 is a schematic diagram showing an overview of a route determination system 300 according to a first embodiment. The route determination system 300 determines a transport route of an article from a starting point X to a destination point Z. Here, it is assumed that autonomous mobile bodies 100a and 100b are present as candidates for transporting the articles on. The autonomous mobile bodies 100a and 100b have different specifications. For example, the autonomous mobile body 100a is a small vehicle, and the autonomous mobile body 100b is a large vehicle.

Since the specifications of the vehicles of the autonomous mobile bodies 100a and 100b are different, the likelihood of theft may also be different. Hereinafter, it is assumed that the autonomous mobile body 100a is more likely to be stolen than the autonomous mobile body 100b. For example, the autonomous mobile body 100a is a small delivery robot, and the autonomous mobile body 100b is a normal automatic drive vehicle. It is considered that the articles transported by the autonomous mobile body 100a or the autonomous mobile body 100a itself are more likely to be stolen than the articles transported by the autonomous mobile body 100b or the autonomous mobile body 100b itself. It can be said that the autonomous mobile bodies that are prone to theft have a high degree of theft easiness.

With the above-described setting, when the article is transported, it can be considered that the article is transported using the autonomous mobile body 100b having a low degree of theft easiness. However, the optimal transport route may vary depending on the vehicle specification. For example, for a large vehicle, a transport route may be determined so as to pass through the highway. When a candidate R1 of the transport route traveled on by the autonomous mobile body 100a and a candidate R2 of the transport route traveled on by the autonomous mobile body 100b are different, the theft risk of the candidate R1 may be lower than that in the case of the candidate R2. The theft risk is a value representing the magnitude of the risk of an occurrence of theft on the candidate. The route determination system according to the first embodiment determines the candidate estimated to have a low theft risk from among a plurality of candidates as the transport route.

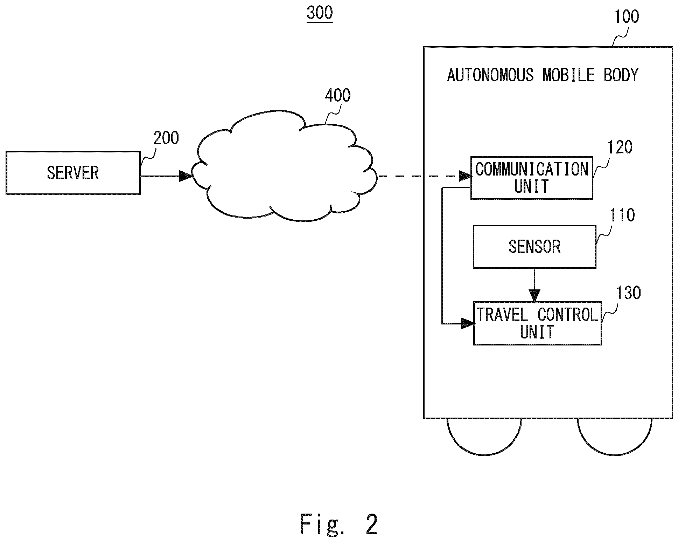

Next, a configuration example of the route determination system 300 will be described with reference to Fig. 2. The route determination system 300 includes an autonomous mobile body 100 and a server 200. The autonomous mobile body 100 and the server 200 are connected to each other via a network 400. The network 400 is a communication line network such as the Internet, an intranet, a cellular phone network, and a LAN (Local Area Network). The autonomous mobile body 100 may be an autonomous mobile vehicle traveling on a roadway or a smaller transport robot.

The server 200 determines a candidate having a low risk of theft between the candidate R1 and the candidate R2 shown in Fig. 1 as the transport route. Then, the server 200 transmits the determined transport route to the autonomous mobile body 100 corresponding to the selected candidate between the autonomous mobile bodies 100a and 100b.

The autonomous mobile body 100 includes a sensor 110, a communication unit 120, and a travel control unit 130. The sensor 110 collects environmental data around the autonomous mobile body 100 and outputs it to the travel control unit 130. The sensor 110 is, for example, a camera, radar, LIDAR, or the like. The communication unit 120 is a communication interface for performing wireless communication with the network 400. The communication unit 120 receives the transport route determined by the server 200 via the network 400.

The travel control unit 130 controls the autonomous mobile body 100 to autonomously move along the transport route using the environmental data collected by the sensor 110. Here, it is assumed that the autonomous mobile body 100 acquires the position of the autonomous mobile body 100 by GPS (Global Positioning System), the sensor 110, or the like.

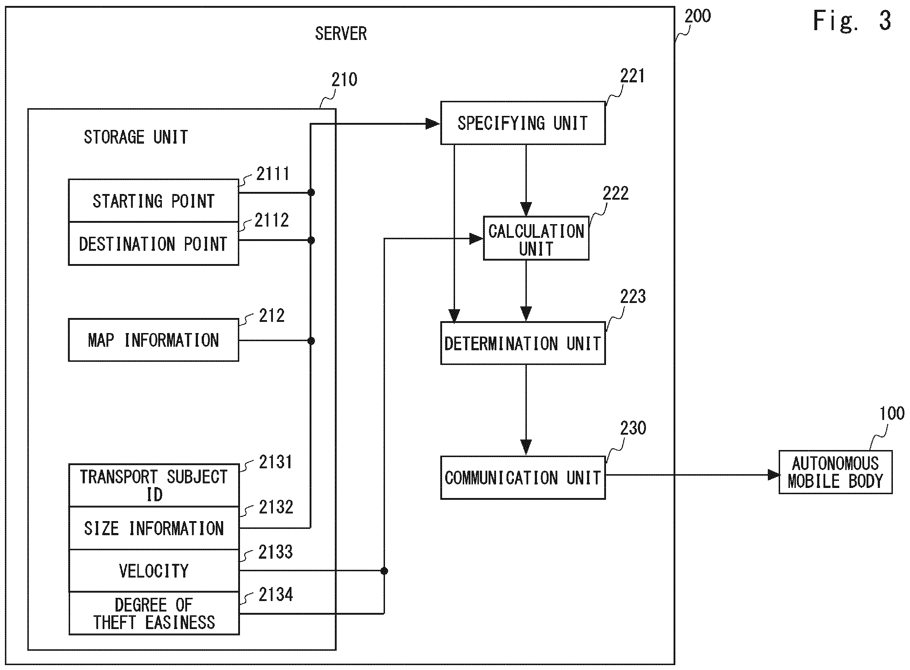

Next, the server 200 will be described in detail with reference to Fig. 3. The server 200 determines the transport route for the autonomous mobile body 100 to transport the package. The server 200 includes a storage unit 210, a specifying unit 221, a calculation unit 222, a determination unit 223, and a communication unit 230.

The storage unit 210 is a storage apparatus such as a hard disk or a flash memory. The storage unit 210 may also include a volatile storage apparatus such as a RAM (Random Access Memory) which is a storage area for temporarily holding information. The communication unit 230 is a communication interface with the network 400.

The storage unit 210 stores a starting point 2111, a destination point 2112, map information 212, a transport subject ID 2131, size information 2132, a velocity 2133, and a degree of theft easiness 2134. The storage unit 210 stores the starting point 2111 in transporting the article and the destination point 2112 in association with each other.

The map information 212 is map data including a delivery area. The specifying unit 221, which will be described later, specifies the candidate of the transport route using the map information 212. The map information 212 may be, for example, data of a road map in which nodes representing intersections and links representing passages are numbered. The map information 212 may be an environmental map showing an area of a building as an obstacle or the like. The map information 212 includes information about a width of the passage. The specifying unit 221, which will be described later, specifies, for example, the candidate of the transport route including a passage through which the selected vehicle can pass.

The storage unit 210 stores the transport subject ID 2131, the size information 2132, the velocity 2133, and the degree of theft easiness 2134 in association with each other. The transport subject ID 2131 is an identifier for identifying an autonomous mobile vehicle serving as a transport subject. The size information 2132 is information related to a width of the vehicle, and is used when the specifying unit 221 described later generates a candidate of the transport route for each vehicle. The velocity 2133 is used to calculate the time required for the vehicle to transport the article.

The degree of theft easiness 2134 is a value representing the likelihood of theft when the article is transported using the vehicle. For example, a smaller value may be set in the degree of theft easiness 2134 for large vehicles, and a larger value may be set in the degree of theft easiness for small vehicles. Further, a smaller value may be set in the degree of theft easiness for special vehicles equipped with a monitoring camera or the like. The storage unit 210 may store a security level representing the safety of the vehicle in place of the degree of theft easiness 2134. The route determination system 300 may use, for example, an inverse of the security level as the degree of theft easiness 2134.

Note that the storage unit 210 may store information related to the type of suspension of the vehicle in association with the transport subject ID 2131. For example, when a fragile article is transported, the specifying unit 221 described later may select a vehicle including suspension having good performance and specify a candidate of the transport route.

The specifying unit 221 selects a plurality of vehicles and specifies the transport route when each vehicle is used. Here, the specifying unit 221 specifies the transport route from the starting point 2111 to the destination point 2112 using the map information 212 and the size information 2132. The specifying unit 221 outputs the plurality of specified candidates to the calculation unit 222 and the determination unit 223.

The calculation unit 222 uses the velocity 2133 and the degree of theft easiness 2134 to calculate the risk of an occurrence of theft (which is also referred to as a theft risk) in the candidate specified by the specifying unit 221. The calculation unit 222 first calculates the time required for transportation using a path length and the velocity 2133 of the specified candidate. Then, the calculation unit 222 calculates the theft risk by multiplying the calculated time by the degree of theft easiness 2134. The calculation unit 222 outputs the calculation result to the determination unit 223.

The determination unit 223 determines the transport route from among the plurality of candidates specified by the specifying unit 221 so that the theft risk is reduced based on the theft risk calculated by the calculation unit 222. For example, the determination unit 223 determines, as the transport route, the candidate having the lowest theft risk calculated by the calculation unit 222 from among the plurality of candidates specified by the specifying unit 221. The determination unit 223 may determine, as the transport route, the second or third lowest theft risk from among the plurality of specified candidates. The determination unit 223 transmits the transport route to the autonomous mobile body 100 corresponding to the determined transport route via the communication unit 120.

Note that when the article to be transported is a valuable article, the determination unit 223 may determine the candidate having the lowest theft risk as the transport route. For example, when the article to be transported is not a valuable article, the determination unit 223 may determine the candidate having the minimum time required for the transportation as the transport route.

Note that the functions of the specifying unit 221, the route determination unit 222, and the acquisition unit 223 may be implemented by a processor (not shown) reading a program into a RAM and executing the program.

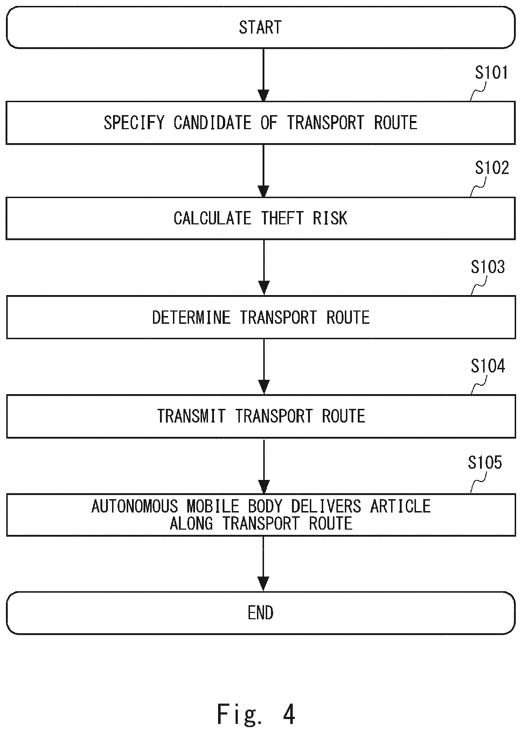

Fig. 4 is a flowchart showing an operation of the route determination system 300 according to the first embodiment. First, the route determination system 300 selects the plurality of vehicles and specifies the candidates of the transport route from the starting point 2111 to the destination point 2112 (Step S101). Here, the route determination system 300 may specify appropriate candidates so that the transport route does not become too long. The starting point 2111 may be a warehouse for storing delivery articles. The destination point is information indicating a delivery destination of the article.

Next, the determination unit 223 calculates the theft risk for each candidate specified in Step S101 (Step S102). Next, the determination unit 223 determines, for example, the candidate having the minimum risk calculated in Step S102 as the transport route (Step S103).

Next, the server 200 transmits the transport route to the autonomous mobile body 100 corresponding to the determined candidate (Step S104). Finally, the autonomous mobile body 100 autonomously moves along the transport route received in Step S104, and delivers the article (Step S105).

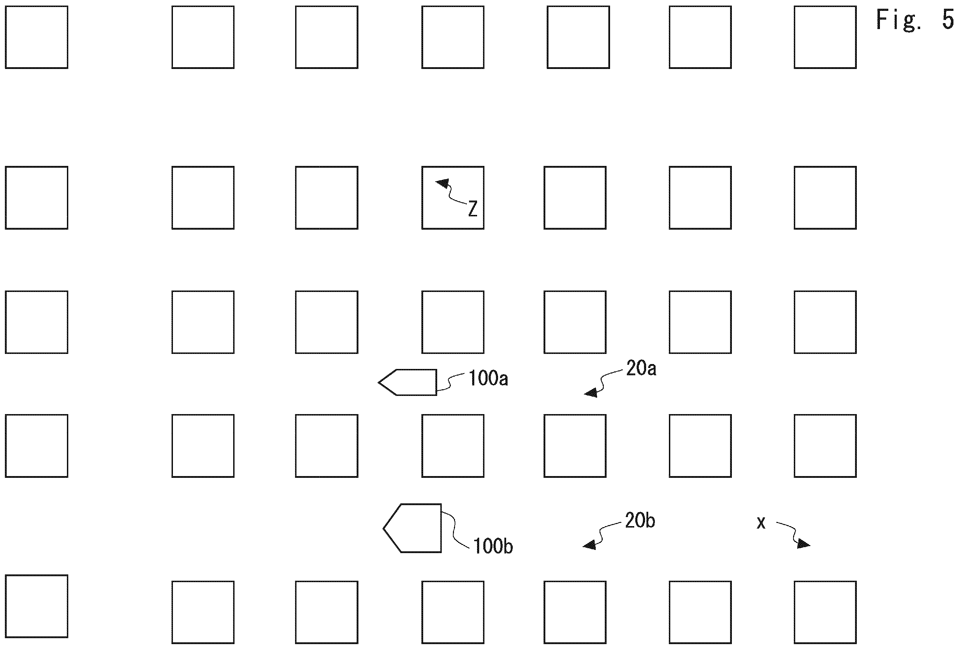

Next, a specific example of the transport route will be described with reference to Figs. 5 to 8. Fig. 5 is a map showing the delivery area. The route determination system 300 shall determine the transport route from the point X to the point Z.

It is assumed that the route determination system 300 stores information about the autonomous mobile bodies 100a and 100b. The autonomous mobile body 100b is a vehicle larger than the autonomous mobile body 100a. The delivery area includes two kinds of passages 20a and 20b having widths different from each other. The autonomous mobile body 100a can pass through the passages 20a and 20b. The autonomous mobile body 100b can pass through the passage 20b but cannot pass through the passage 20a.

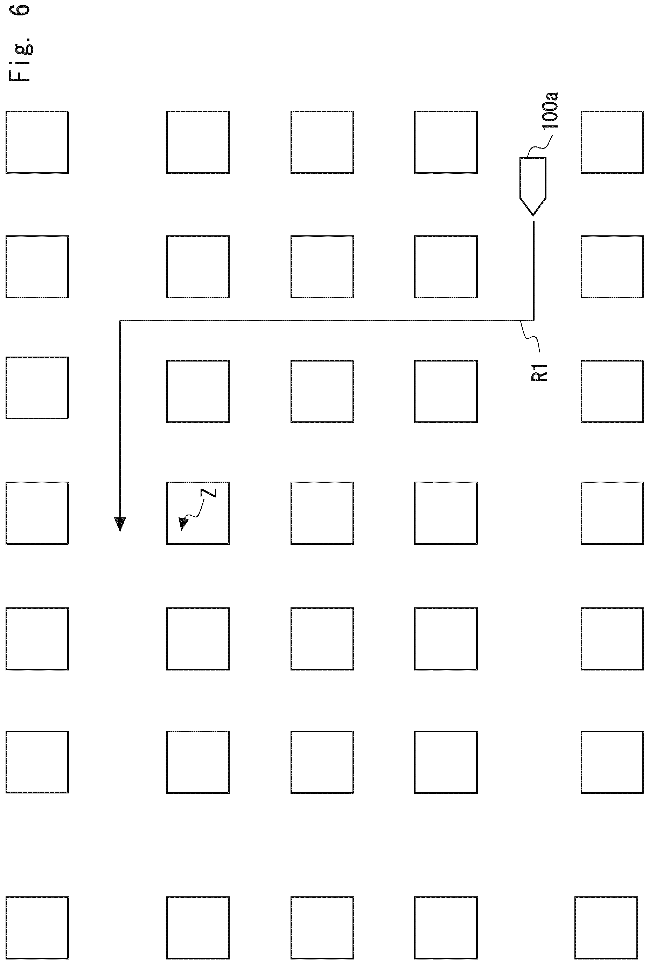

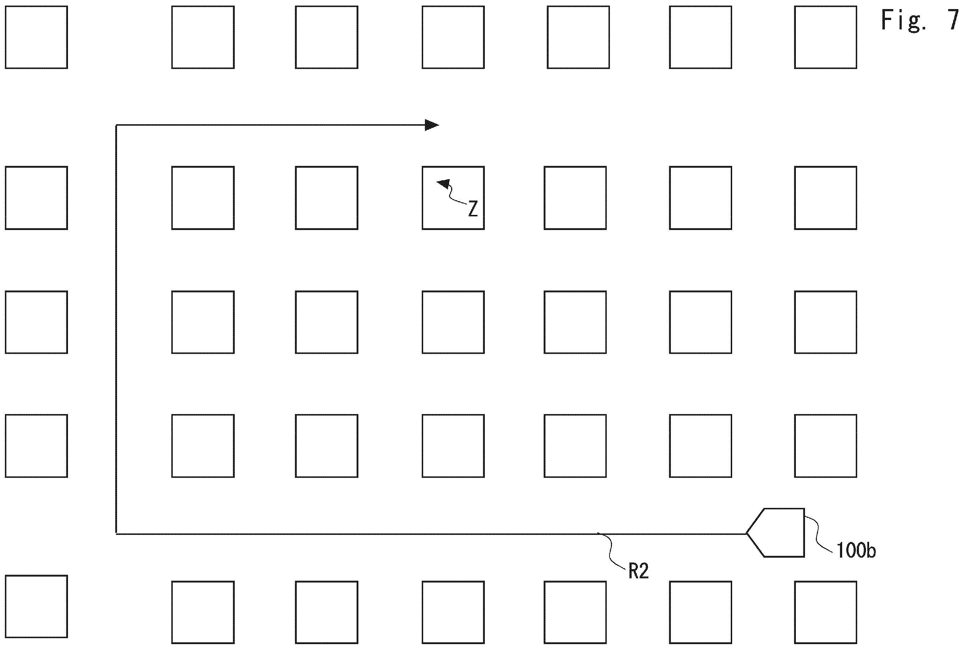

The specifying unit 221 specifies the candidate R1 of the transport route when the autonomous mobile body 100a is used and the candidate R2 of the transport route when the autonomous mobile body 100b is used. Fig. 6 shows the candidate R1 of the transport route when the autonomous mobile body 100a is used. The candidate R1 includes a part passing through the passage 20a. Fig. 7 shows the candidate R2 of the transport route when the autonomous mobile body 100b is used. Unlike the candidate R1, the candidate R2 does not include a part passing through the passage 20a. A method for generating an appropriate transport route for each vehicle is known in the art, and thus a description thereof will be omitted.

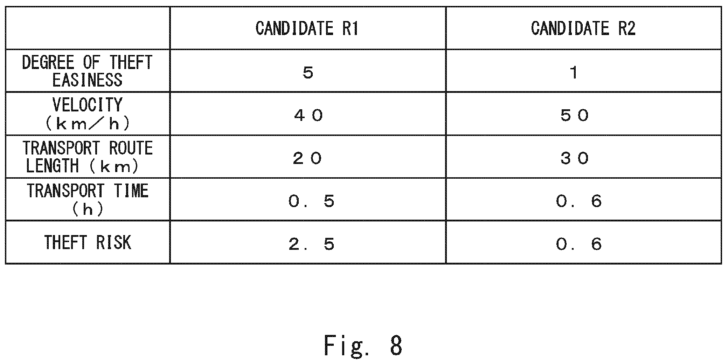

Next, a method of determining the transport route between the candidates R1 and R2 will be described with reference to Fig. 8. It is assumed that the degree of theft easiness 2134 of the autonomous mobile body 100a is "5", and the degree of theft easiness 2134 of the autonomous mobile body 100b is "1". It is also assumed that the velocity 2133 of the autonomous mobile body 100a is 40 km/h, and the velocity 2133 of the autonomous mobile body 100b is 50 km/h.

The calculation unit 222 calculates the length of the transport path (transport path length) from the candidates R1 and R2 specified by the specifying unit 221. Then, the calculation unit 222 calculates the time required for the transportation (a transportation time) by dividing the length of the path by the velocity 2133. The time required for the transportation may be calculated by the specifying unit 221.

Then, the calculation unit 222 calculates the theft risk for each of the candidates R1 and R2 by multiplying the time required for the transportation by the degree of theft easiness 2134. The determination unit 223 determines the candidate R2 having a low theft risk as the transport route.

The route determination system 300 determines, as the transport route, the candidate having a low theft risk from among the plurality of candidates. Thus, the route determination system 300 can reduce the risk of an occurrence of theft if the plurality of autonomous mobile bodies can be selected.

### [Second embodiment]

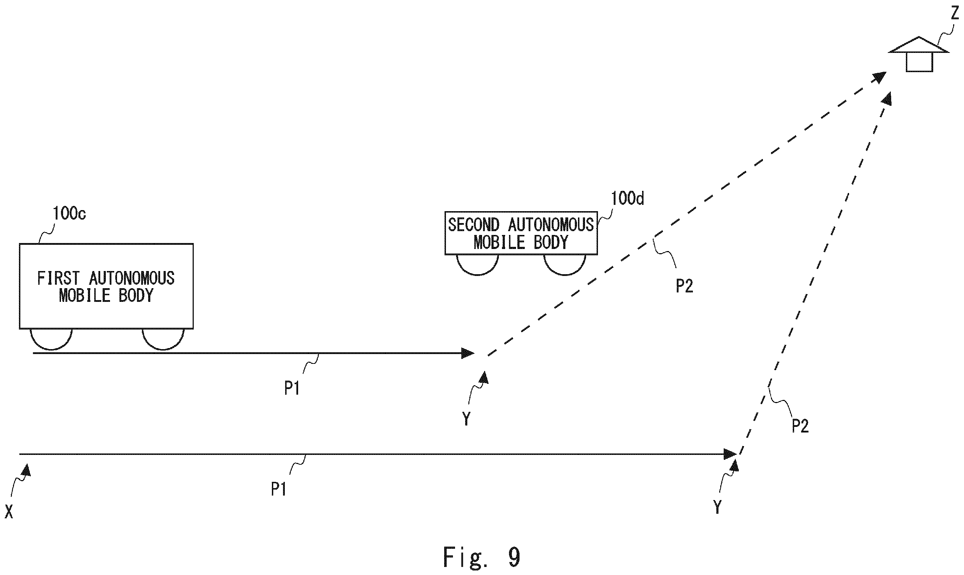

Fig. 9 is a schematic diagram showing an overview of a route determination system 300a according to a second embodiment.

The route determination system 300a determines a transport route for transporting articles from a starting point X to a destination point Z. Here, the transport route includes a first transport section P1 traveled on by a first autonomous mobile body 100c and a second transport section P2 traveled on by a second autonomous mobile body 100d. The first transport section P1 is a section from the starting point X to an intermediate point Y. The second transport section P2 is a section from the intermediate point Y to the destination point Z. At the intermediate point Y, the articles are transferred from the first autonomous mobile body 100c to the second autonomous mobile body 100d. The intermediate point may be a parking lot or the like where the first autonomous mobile body 100c can stop.

For example, the first autonomous mobile body 100c may be an automatic drive vehicle, and the second autonomous mobile body 100d may be a smaller transport robot. Further, the second autonomous mobile body 100d may be mounted on the first autonomous mobile body 100c, and the transportation of the article may be started from a stop position of the first autonomous mobile body 100c.

Even when a plurality of transport sections are present as described above, in a manner similar to the first embodiment, the transport routes in the first transport section and the second transport section may differ depending on the type of the vehicle selected as the first autonomous mobile body 100c or the second autonomous mobile body 100d. Further, as shown in the drawing, even when there are a plurality of candidates of the intermediate point Y, there may be a plurality of candidates of the transport route. In such a case, the route determination system 300a determines an appropriate transport route.

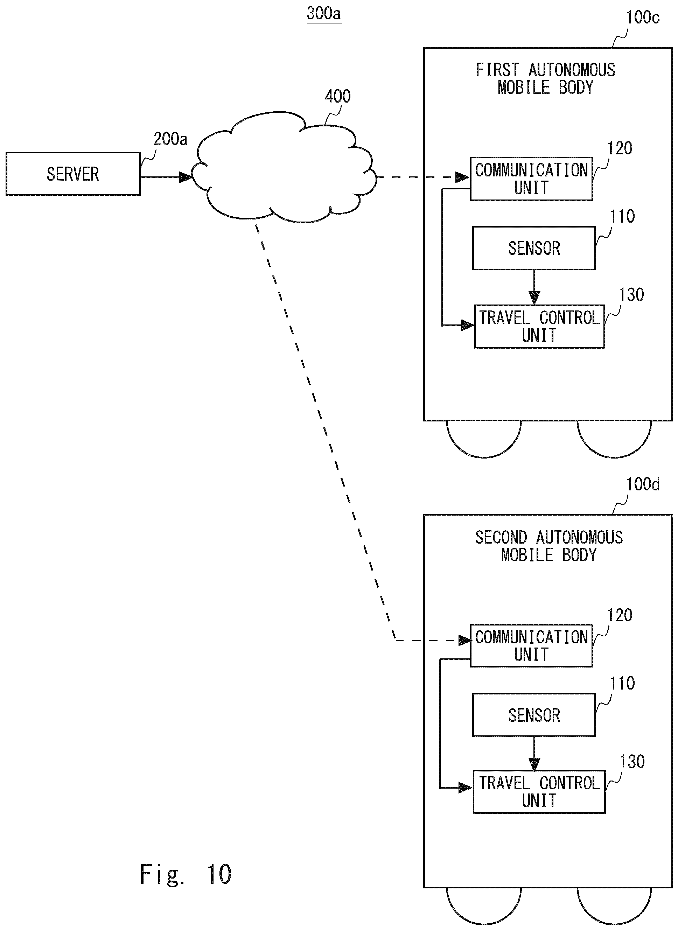

Fig. 10 is a configuration diagram showing a configuration of the route determination system 300a. A server 200a transmits the transport route in the first transport section P1 to the first autonomous mobile body 100c and transmits the transport route in the second transport section P2 to the second autonomous mobile body 100d. The functions of the first autonomous mobile body 100c and the second autonomous mobile body 100d are the same as those of the first embodiment, and thus a description thereof will be omitted.

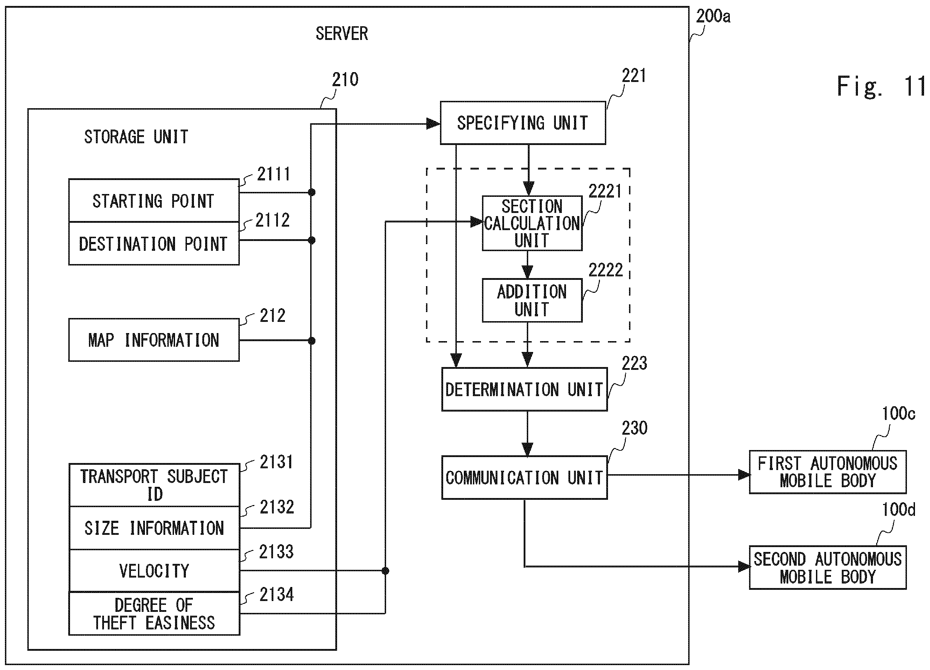

Next, the server 200a will be described in detail with reference to Fig. 11. Hereinafter, a difference between the second embodiment and the first embodiment will be mainly described. The calculation unit 222 according to the first embodiment corresponds to a section calculation unit 2221 and an addition unit 2222.

The specifying unit 221 specifies the candidate of the transport route from the starting point 2111 to the destination point 2112 using the map information 212. For example, the specifying unit 221 may select a plurality of vehicles and specify candidates of the transport route from the starting point 2111 to the destination point 2112 when each of the vehicles is used as the first autonomous mobile body 100c.

Here, the specifying unit 221 designates, for example, an area around the destination point 2112 where the selected first autonomous mobile body 100c can stop as the point Y. Then, the specifying unit 221 determines the first transport section from the starting point 2111 to the point Y for each selected vehicle. When the specifying unit 221 determines the second transport section, the specifying unit 221 may specify a transport route from the point Y to the destination point 2112 to be traveled on by a predetermined delivery robot. The specifying unit 221 outputs the specified transport route in the first transport section and the specified transport route in the second transport section to the section calculation unit 2221 and the determination unit 223.

The specifying unit 221 may specify the transport routes in the first transport section and the transport routes in the second transport section for the plurality of intermediate points Y. In such a case, the types of the first autonomous mobile body 100c and the second autonomous mobile body 100d may be predetermined.

For each of the specified candidates, the section calculation unit 2221 calculates the time required for the transportation in the first transport section and the time required for transportation in the second transport section using the velocities 2133 of the first autonomous mobile body 100c and the second autonomous mobile body 100d. Then, for each of the specified candidates, the section calculation unit 2221 multiplies the time required for the transportation in the first transport section by the degree of theft easiness 2134 of the first autonomous mobile body 100c to calculate a section risk indicating the magnitude of the risk of an occurrence of theft in the first transport section. Likewise, for each of the specified candidates, the section calculation unit 2221 calculates the section risk representing the magnitude of the risk of an occurrence of theft in the second transport section. The section calculation unit 2221 outputs the calculated section risk to the addition unit 2222.

The addition unit 2222 calculates the sum of the section risk in the first transport section and the section risk in the second transport section to calculate the theft risk in each of the specified candidates. The addition unit 2222 outputs the calculation result to the determination unit 223.

The determination unit 223 determines the transport route from among the plurality of candidates based on the theft risk calculated by the addition unit 2222 so that the theft risk is reduced. For example, the determination unit 223 determines the candidate having the minimum theft risk as the transport route from among the candidates specified by the specifying unit 221. The determination unit 223 transmits the transport route in the first transport section to the first autonomous mobile body 100c via the communication unit 230, and transmits the transport route in the second transport section to the second autonomous mobile body 100d.

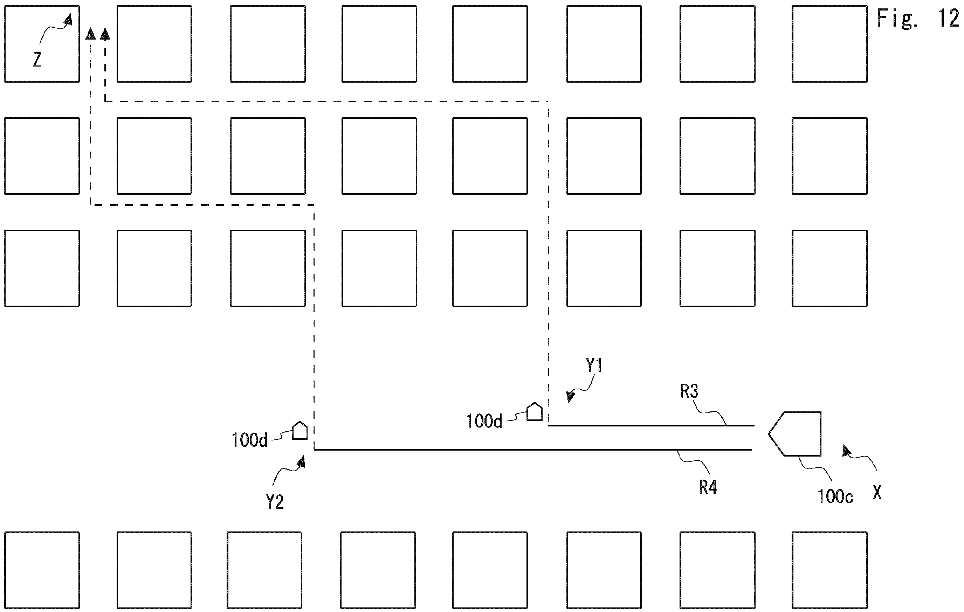

A specific example of the transport route will be described with reference to Fig. 12. Fig. 12 is a map showing a delivery area. The route determination system 300a shall determine the transport route from the point X to the point Z. There are wide passages through which the first autonomous mobile body 100c can pass and narrow passages through which the first autonomous mobile body 100c cannot pass in the delivery area.

The route determination system 300a specifies a plurality of candidates of the transport route when the first autonomous mobile body 100c and the second autonomous mobile body 100d are used. The route determination system 300a selects intermediate points Y1 and Y2 as the intermediate points. The route determination system 300a specifies the first transport section from the starting point X to the intermediate point Y1 and the second transport section from the intermediate point Y1 to the destination point Z, and designates the transport route as a candidate R3. Further, the route determination system 300a specifies the first transport section from the starting point X to the intermediate point Y2 and the second transport section from the intermediate point Y2 to the destination point Z, and designates the transport route as a candidate R4. In the drawing, the first transport sections are indicated by solid lines, and the second transport sections are indicated by dotted lines.

Next, the route determination system 300a calculates the theft risk of the candidates R3 and R4 based on the section risk in the first transport section and the section risk in the second transport section. Then, the route determination system 300a determines the candidate having a low theft risk as the transport route. In Fig. 12, the transportation time on the candidate R4 traveled on by the second autonomous mobile body 100d is shorter than that in the case of the candidate R3. Therefore, if the degree of theft easiness 2134 of the second autonomous mobile body 100d is set sufficiently high, the route determination system 300a determines the candidate R4 as the transport route.

Although the case in which the server 200a determines the transport route has been described, when a predetermined mobile body is used as the first autonomous mobile body 100c, the first autonomous mobile body 100c may acquire the information about the delivery destination and determine the transport route from the current position to the delivery destination. That is, the processing performed by the specifying unit 221, the section calculation unit 2221, the addition unit 2222, and the determination unit 223 may be performed on the first autonomous mobile body 100c side. The first autonomous mobile body 100c autonomously moves in the first transport section along the transport route determined by the first autonomous mobile body 100c itself to deliver the article. Then, the first autonomous mobile body 100c transmits the transport route in the second transport section to the second autonomous mobile body 100d. In such a case, the route determination system 300a may not include the server 200a. That is, a system in which the processing is completed in the first autonomous mobile body 100c and the second autonomous mobile body 100d can also be included in the route determination system 300 according to the first embodiment.

In the above description, the case in which the transport route includes the first transport section and the second transport section has been described, but the transport route may include three or more transport sections.

When the transport route includes a plurality of transport sections, the route determination system 300a determines a candidate having a low theft risk as the transport route. Therefore, the route determination system 300a can reduce the risk of an occurrence of theft when a plurality of autonomous mobile bodies are used to transport articles.

### [Third embodiment]

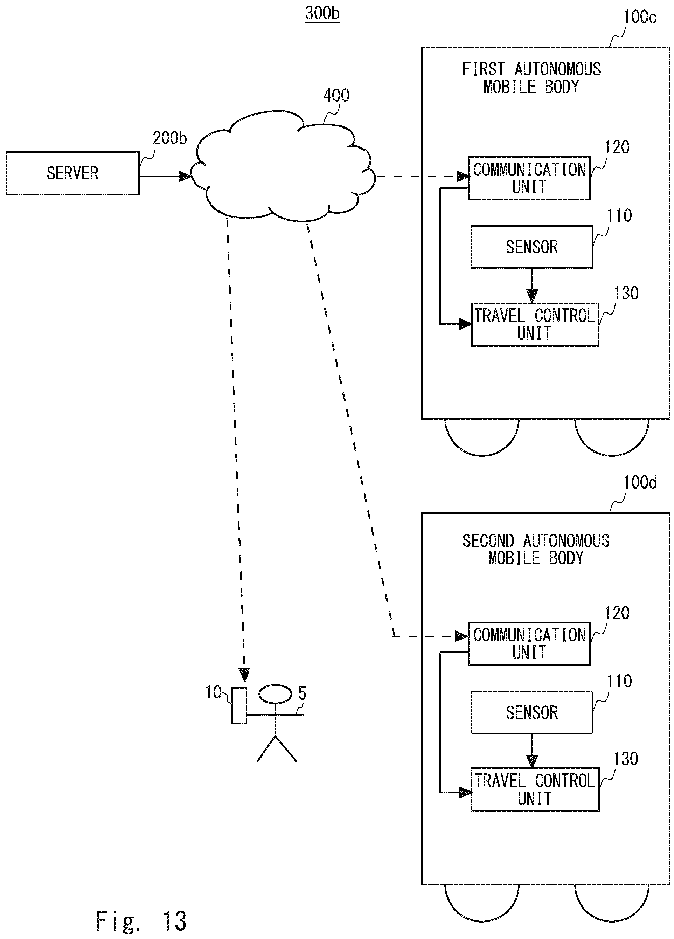

A route determination system 300b according to a third embodiment is a modified example of the second embodiment. The route determination system 300b can select a human as the transport subject in the second transport section. Sometimes it is safer for an article to be transported by a human than it is for an article to be transported by a small delivery robot. Fig. 13 is a schematic configuration diagram showing an overview of the route determination system 300b. The route determination system 300b includes a server 200b, a first autonomous mobile body 100c, and a second autonomous mobile body 100d. The route determination system 300b transmits a transport route to a communication terminal 10 owned by a person 5. The person 5 can confirm the display of the communication terminal 10 and transport the article along the transport route.

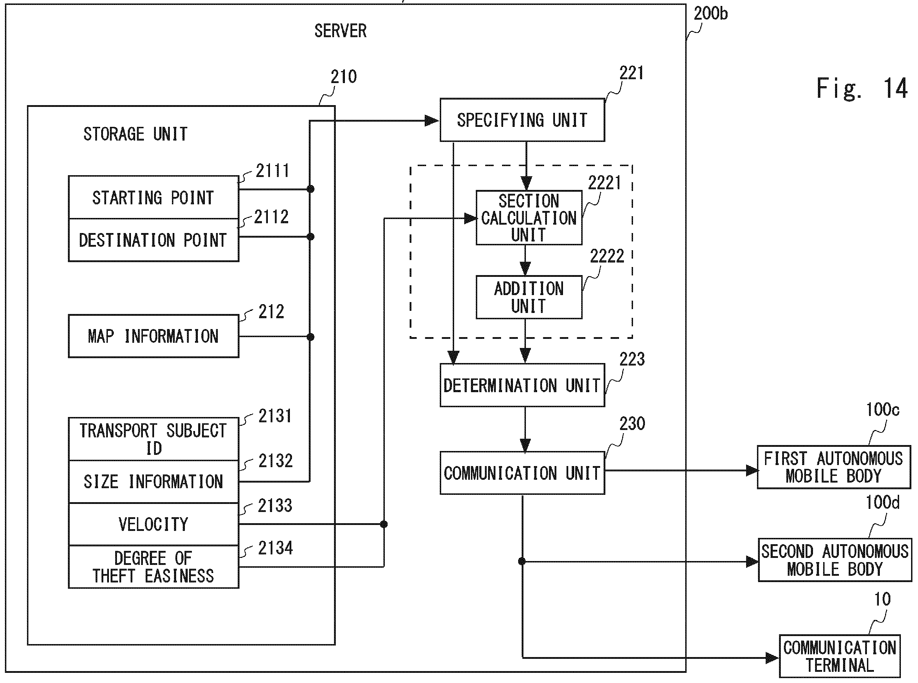

Next, a configuration of the server 200b will be described with reference to Fig. 14. Hereinafter, a difference between the third embodiment and the second embodiment will be mainly described. The storage unit 210 further stores the degree of theft easiness 2134 of the person 5 in addition to the degree of theft easiness 2134 of the vehicle. The degree of theft easiness 2134 of the person 5 represents the likelihood of an occurrence of theft when the person transports the article. The degree of theft easiness 2134 when the transport subject is a person may be set lower than that when the transport subject is an autonomous mobile body.

The specifying unit 221 specifies a route when the person is used as the transport subject in the second transport section, and outputs the route to the section calculation unit 2221 and the determination unit 223. By a method similar to the method according to the second embodiment, the section calculation unit 2221 and the addition unit 2222 can calculate a theft risk in the case of transporting the article by a person. The determination unit 223 outputs the transport route determined from among the plurality of candidates to the communication terminal 10 or the second autonomous mobile body 100d via the communication unit 230.

Note that the storage unit 210 may store the degree of theft easiness 2134 for a plurality of persons. For example, consider the case in which the first autonomous mobile body 100c is an automatic drive vehicle which transports a person who is a passenger together with an article. In such a case, the storage unit 210 may store both the degree of theft easiness 2134 of the passenger and the degree of theft easiness 2134 of a recipient to which the article is delivered. The route determination system 300b may, for example, set the degree of theft easiness 2134 of the passenger higher than the degree of theft easiness 2134 of the recipient.

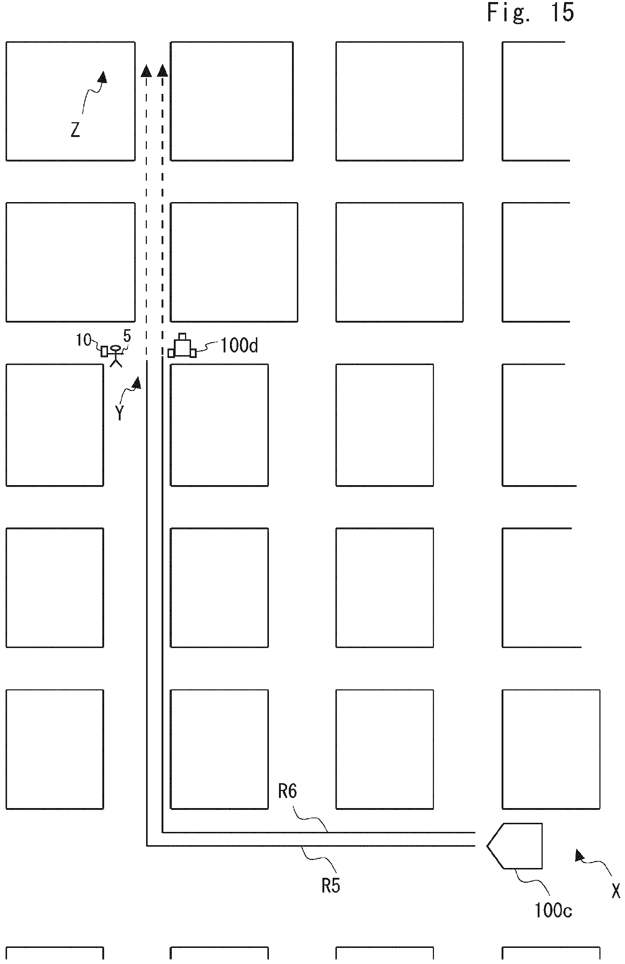

With reference to Fig. 15, the route determination system 300b according to the third embodiment will be described. The route determination system 300b specifies the candidate of the transport route in a manner similar to the second embodiment. The route determination system 300b specifies, for example, a candidate R5 of the transport route when the transport subject in the second transport section is the person 5, and a candidate R6 of the transport route when the transport subject is the second autonomous mobile body 100d. In the first transport section, the first autonomous mobile body 100c transports the article from the start point X to the intermediate point Y. In the drawing, the first transport sections are indicated by solid lines, and the second transport sections are indicated by dotted lines.

Although the transport routes of the candidates R5 and R6 in the second transport section are the same in Fig. 15, they may be different from each other. When the passage through which the second autonomous mobile body 100d can pass is limited, the transport route through which the second autonomous mobile body 100d passes is different from the transport route through which the person 5 passes.

The route determination system 300b calculates the section risk of the first transport section traveled on by the first autonomous mobile body 100c and the section risk of the second transport section traveled on by the person 5, and calculates the theft risk in the candidate R5 by adding them. In a manner similar to this, the route determination system 300b calculates the theft risk in the candidate R6. Then, the route determination system 300b determines, as the transport route, the candidate having the lower calculated theft risk. Therefore, when the degree of theft easiness 2134 of the person 5 is set sufficiently low, it can be said that the route determination system 300b is likely to determine, as the transport route, the candidate along which the person 5 transports the article.

As described above, when a person is used instead of the autonomous mobile body, the risk of an occurrence of theft can also be reduced as in the second embodiment.

Although the above embodiments have been described as a hardware configuration, the present disclosure is not limited thereto. The present disclosure may be realized by causing a CPU to execute a computer program for executing specified processing.

In the above example, the program includes instructions (or software codes) that, when loaded into a computer, cause the computer to perform one or more of the functions described in the embodiments. The program may be stored in a non-transitory computer readable medium or a tangible storage medium. By way of example, and not a limitation, non-transitory computer readable media or tangible storage media can include a random-access memory (RAM), a read-only memory (ROM), a flash memory, a solid-state drive (SSD) or other types of memory technologies, a CD-ROM, a digital versatile disc (DVD), a Blu-ray disc or other types of optical disc storage, and magnetic cassettes, magnetic tape, magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

Note that the present disclosure is not limited to the embodiments described above, and may be appropriately modified without departing from the spirit thereof.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A route determination system for determining a transport route of an article from among a plurality of candidates, autonomous mobile bodies (100) for transporting the article on the plurality of candidates being different from each other, the route determination system comprising:
a calculation unit (222) configured to calculate, for each of the plurality of candidates, a theft risk based on a degree of theft easiness (2134) and a time required for the transportation by the autonomous mobile body (100), the degree of theft easiness (2134) representing likelihood of an occurrence of theft in the autonomous mobile body (100), and the theft risk representing a magnitude of a risk of the occurrence of the theft; and
a determination unit (223) configured to determine the transport route from among the plurality of candidates so that the theft risk is reduced based on the theft risk calculated by the calculation unit (222).

2. A route determination system for determining a transport route of an article from among a plurality of candidates, each of the plurality of candidates including a plurality of transport sections, a transport subjects for transporting the article in the plurality of transport sections are different from each other, at least one of the transport subjects being an autonomous mobile body (100), the route determination system comprising:
a section calculation unit (2221) configured to calculate a section risk based on a degree of theft easiness (2134) for the transport subject in each of the plurality of transport sections for the plurality of candidates and a time required for the transportation by the transport subject, the section risk representing a magnitude of a risk of an occurrence for theft in the transport section, the degree of theft easiness (2134) representing likelihood of an occurrence of theft in the transport subject; and
an addition unit (2222) configured to add the section risks in the plurality of candidates to calculate a theft risk representing a magnitude of a risk of the occurrence of the theft; and
a determination unit (223) configured to determine the transport route from among the plurality of candidates so that the theft risk is reduced based on the theft risk calculated by the addition unit (2222).

3. The route determination system according to Claim 2, wherein
the plurality of candidates include a first transportation section traveled on by the first autonomous mobile body (100c) and a second transportation section traveled on by a second autonomous mobile body (100d), the degree of theft easiness of the first autonomous mobile body (100c) being estimated to be lower than that of the second autonomous mobile body (100d), and
starting points of the second transport sections of the plurality of candidates are different from each other.

4. The route determination system according to Claim 2, wherein
the degree of theft easiness (2134) when the transport subject is a person is determined to be lower than the degree of theft easiness (2134) when the transport subject is the autonomous mobile body (100).

5. The route determination system according to Claim 4, wherein
the determination unit (223) is configured to output, to a communication terminal (10) owned by the person, a transport section in which the person as the transport subject transports the article in the transport route.

6. A route determination method for determining a transport route of an article from among a plurality of candidates, autonomous mobile bodies (100) for transporting the article on the plurality of candidates being different from each other, the route determination method comprising:
calculating, for each of the plurality of candidates, a theft risk based on a degree of theft easiness (2134) and a time required for the transportation by the autonomous mobile body (100), the degree of theft easiness (2134) representing likelihood of an occurrence of theft in the autonomous mobile body, and the theft risk representing a magnitude of a risk of the occurrence of the theft; and
determining the transport route from among the plurality of candidates so that the theft risk is reduced based on the theft risk calculated in the calculating.

7. A route determination program for determining a transport route of an article from among a plurality of candidates, autonomous mobile bodies (100) for transporting the article on the plurality of candidates being different from each other, the route determination program causing a computer to execute:
calculating, for each of the plurality of candidates, a theft risk based on a degree of theft easiness (2134) and a time required for the transportation by the autonomous mobile body (100), the degree of theft easiness (2134) representing likelihood of an occurrence of theft in the autonomous mobile body (100), and the theft risk representing a magnitude of a risk of the occurrence of the theft; and
determining the transport route from among the plurality of candidates so that the theft risk is reduced based on the theft risk calculated in the calculating.
